# FASCICULE DE BREVET EUROPEEN

(11) **EP 2 532 078 B1**
(45) Date de publication et mention de la délivrance du brevet: **03.07.2019**
(21) Numéro de dépôt: 11705946.9
(22) Date de dépôt: 31.01.2011
(51) Int. Cl.: H02K 9/28, A47L 5/38

(54) **DISPOSITIF DE GUIDAGE D'AIR DANS UN SYSTEME D'ASPIRATION POUR UNE MACHINE ELECTRIQUE TOURNANTE**
VORRICHTUNG ZUR LUFTFÜHRUNG IN EINEM SAUGSYSTEM EINER ELEKTRISCHEN DREHMASCHINE
APPARATUS FOR AIR GUIDANCE IN A SUCTION SYSTEM FOR A ROTATING ELECTRIC MACHINE

(30) Priorité: 01.02.2010 FR 1050674
(43) Date de publication de la demande: 12.12.2012
(73) Titulaire: Mersen France Amiens SAS, 80080 Amiens (FR)
(72) Inventeur: VASSEUR, Patrice, F-80670 Pernois (FR)
(74) Mandataire: Fédit-Loriot
(86) Numéro de dépôt international: PCT/FR2011/050186
(87) Numéro de publication internationale: WO 2011/092441

(56) Documents cités:
- EP-A1- 1 768 235
- WO-A2-00/69049
- GB-A- 1 005 433
- US-A1- 2003 168 083

## Description

La présente invention concerne le domaine des porte-balais et plus particulièrement les porte-balais pour machines électriques tournantes.

Un dispositif porte-balai est un ensemble d'éléments servant à porter ou maintenir en place un balai d'une machine électrique tournante, par exemple un moteur ou un générateur.

Un balai, habituellement à base de graphite, permet d'assurer la transmission de la puissance électrique entre un élément mobile et un élément fixe.

Le dispositif porte-balai a pour objectif de maintenir le balai en contact avec la surface mobile de la machine électrique tournante, par exemple un collecteur ou une bague, tout en exerçant sur ce balai une certaine pression. Habituellement, la pression est assurée par l'intermédiaire d'un dispositif élastique tel qu'un ressort.

Des poussières sont générées du fait du frottement du balai contre l'élément mobile. Ces poussières sont susceptibles de conduire à une dégradation de l'état de surface du collecteur ou de la bague et/ou des coincements mécaniques et/ou des défauts d'isolation électrique.

Le document WO 00/69049 décrit un système d'aspiration de la poussière générée par un balai, comprenant un dispositif de collecte à l'arrière du balai.

Il existe un besoin pour un dispositif plus compact.

Le document US 2003/168083 décrit un système d'extraction de contaminants d'une machine électrique tournante.

Le document GB 1005433 décrit un dispositif avec des conduits de gaz.

Le document EP 1 768 235 décrit une machine électrique tournante.

Le document DE 10 2009 024 416 décrit une machine électrique tournante avec un arbre et des balais dans un boîtier ainsi qu'un ventilateur.

L'invention a pour objet un ensemble selon la revendication 1.

Cet ensemble comprend une cage et un dispositif de guidage d'un système d'aspiration, ce système d'aspiration étant destiné à aspirer de la poussière générée par un balai frottant sur un élément rotatif d'une machine électrique tournante, le dispositif de guidage étant agencé de façon à concentrer un flux d'air, généré par le système d'aspiration, à proximité de l'extrémité du balai en contact avec l'élément rotatif. Le dispositif de guidage définit au moins une chambre d'aspiration conformée de façon à s'ouvrir vers l'élément rotatif, cette au moins une chambre comportant un ensemble de parois s'étendant suivant une même direction longitudinale. Cet ensemble de parois est conformé pour entourer une partie de balai proche de cette extrémité en contact avec l'élément rotatif.

Ce dispositif de guidage peut ainsi être relativement compact et facile à installer.

Cette ou ces parois s'étendant suivant la direction longitudinale seront dites verticales dans la présente demande.

La ou les parois verticales entourant le balai, sur une partie au moins de sa hauteur, l'ensemble formé par le balai et le dispositif de guidage peut occuper un volume relativement restreint. Cet ensemble peut donc être mis en place dans une installation plus facilement que le système du document discuté ci-dessus.

Le nombre de ces parois verticales peut être de quatre, en particulier pour un balai à forme générale de pavé, mais il va de soi que l'on peut prévoir une, deux, trois parois, cinq parois, ou davantage. Notamment, pour un balai avec une base circulaire, il serait avantageux de prévoir un dispositif de guidage avec une seule paroi circulaire, avec un diamètre interne légèrement supérieur au diamètre externe de la base du balai, afin de s'ajuster au mieux au balai. Pour un balai à base hexagonale, il serait avantageux de prévoir un dispositif de guidage avec une section hexagonale, afin de s'ajuster au mieux au balai. De manière générale, il est avantageux que l'ensemble de parois ait une section correspondant à un léger agrandissement de la base du balai, afin de pouvoir recevoir le balai tout en restant relativement proche de ce balai.

Dans le cas d'un ensemble de quatre parois, chacune de ces parois peut avantageusement être plane et perpendiculaire aux deux parois qui lui sont adjacentes, de sorte que la section de l'ensemble de parois soit sensiblement rectangulaire ou même carrée. L'ensemble de parois peut ainsi être adapté aux balais de forme générale pavée.

Les parois peuvent être planes et solidarisées les unes aux autres avec des arrondis ou non. Les parois peuvent éventuellement être courbes, et s'étendre suivant une même direction, de façon à former un cylindre.

On comprendra que la chambre d'aspiration peut être définie par un volume ouvert sur un seul de ses cotés afin de diriger au mieux le flux d'aspiration.

Par « une partie de balai proche de cette extrémité en contact avec l'élément rotatif», on comprendra que les extrémités d'au moins certaines des parois verticales de la chambre d'aspiration restent au-dessus de l'extrémité du balai en contact avec l'élément rotatif, afin que le dispositif de guidage ne constitue pas un obstacle pour le passage de l'élément rotatif. Néanmoins, le dispositif de guidage entoure une partie du balai à proximité de l'extrémité du balai en contact avec l'élément rotatif, permettant notamment d'entourer au plus près la surface du balai en contact avec l'élément rotatif et ainsi de limiter toute fuite de poussières.

Une telle configuration peut notamment permettre de concentrer plus efficacement le flux d'air et de limiter la dispersion dans l'air de la poussière générée par le frottement entre le balai et l'élément mobile.

Par « à proximité » on comprendra que le dispositif viendra suffisamment proche de l'élément rotatif pour limiter la dispersion des poussières, sans toutefois venir en contact avec l'élément tournant.

Selon un mode de réalisation particulier, l'espace entre le dispositif de guidage et l'élément tournant peut être compris entre 2 et 4 mm.

Avantageusement, le dispositif de guidage peut comporter au moins deux parois verticales dont l'une s'étend davantage que l'autre du coté de l'ouverture vers l'élément rotatif, de sorte que lorsque ledit dispositif de guidage est installé autour de la partie du balai en contact avec l'élément rotatif, l'une de ces parois reste au-dessus de l'extrémité du balai en contact avec l'élément rotatif de façon à laisser passer ledit élément rotatif lorsqu'en rotation, et l'autre de ces parois, dite latérale, s'étend au-delà, c'est à dire par convention au-dessous, de l'extrémité du balai en contact avec l'élément rotatif.

Cette paroi latérale ou ces deux parois latérales peu(ven)t ainsi former une jupe pour mieux concentrer encore la poussière.

Pour plus de compacité encore, on pourra prévoir que la chambre d'aspiration soit centrée autour du balai.

Les parois verticales peuvent être relativement proches des cotés du balai.

L'extrémité du balai en contact avec l'élément rotatif peut n'être que grossièrement plane. En particulier, cette extrémité peut avoir une forme sensiblement complémentaire de la forme de l'élément rotatif, du fait de l'usure liée au frottement.

Cette extrémité, destinée à être frottée contre l'élément rotatif, peut être dite horizontale par opposition aux cotés verticaux du balai, destinés à être entourés par la chambre sur une partie de leur hauteur. On comprendra que l'extrémité de frottement peut former un angle non droit avec ces cotés dits verticaux : par exemple, il suffit pour cela que le balai soit amené en frottement contre une portion de l'élément rotatif non perpendiculaire à la direction longitudinale du balai, dite verticale.

Plus particulièrement, le dispositif de guidage pourra définir deux ou davantage chambres d'aspiration. Une pluralité de chambres d'aspiration pourrait permettre de concentrer plus efficacement le flux d'aspiration. Par exemple, si l'on divise la chambre d'aspiration en deux parties et que l'on relie chaque chambre à un flux d'aspiration, chaque chambre aura alors un flux d'aspiration plus concentré. Cette pluralité de chambres d'aspirations peut être délimitée par l'ensemble de parois entourant le balai sur une partie de sa hauteur.

Avantageusement, le dispositif de guidage peut être solidarisé à une cage entourant le balai.

La solidarisation du dispositif de guidage sur la cage du balai peut permettre un positionnement plus aisé du dispositif de guidage vis-à-vis de la zone à aspirer. En outre, le dispositif de guidage peut aussi être installé relativement facilement sur un porte balai déjà en place.

Avantageusement, le dispositif de guidage peut être réalisé par surmoulage autour de la cage.

Plus particulièrement, le dispositif de guidage peut être réalisé en une seule pièce avec la cage. Ce dispositif permet notamment de limiter le nombre de pièces et donc le nombre d'opérations de montage lors de l'installation d'un tel dispositif sur une machine électrique tournante.

Avantageusement, le dispositif de guidage peut comprendre au moins un moyen de raccordement à un conduit. Plus particulièrement, le moyen de raccordement assure une jonction étanche entre le dispositif de guidage et le conduit. En particulier, le moyen de raccordement peut être un orifice traversant le dispositif de guidage afin d'assurer le passage du flux d'air d'une chambre d'aspiration vers un conduit. Le moyen de raccordement peut également être couplé à un piquage en équerre. Le raccordement peut être assuré par vissage ou par collage par exemple.

Selon une disposition particulière, le dispositif de guidage peut comprendre au moins un conduit pour le raccordement à un groupe d'aspiration.

Un groupe d'aspiration est un dispositif permettant de générer un flux d'aspiration d'air. Ce groupe d'aspiration peut être un groupe d'aspiration du type utilisé dans les salles blanches. Nous ne définirons pas plus avant ce dispositif bien connu de l'homme du métier.

Plus particulièrement, la ou les chambres d'aspiration, le conduit, le raccordement et/ou l'embout peuvent être réalisés en un matériau antistatique ou en matériau quelconque recouvert d'un revêtement antistatique.

L'utilisation d'un matériau antistatique empêche la poussière d'adhérer aux parois internes de ces éléments et limite donc les risques d'obstruction de ces derniers.

Selon un mode de réalisation particulier, le conduit est à base de polyuréthane antistatique.

En particulier, le dispositif de guidage peut être réalisé en un matériau électriquement isolant et résistant à la chaleur générée par le fonctionnement de la machine.

L'utilisation d'un matériau électriquement isolant empêche la formation d'arcs électriques, entre l'élément rotatif et le dispositif de guidage, qui pourraient générer des perturbations de fonctionnement de la machine, en particulier par l'endommagement du dispositif de guidage.

La chaleur générée par la machine pourrait faire fondre un matériau plastique traditionnel et ainsi faire perdre la stabilité dimensionnelle du dispositif de guidage, stabilité nécessaire due à la proximité du dispositif de guidage et de l'élément rotatif.

Le matériau utilisé est avantageusement une résine acétal, non conductrice et ayant une plage de température d'utilisation allant de -40°C à plus de 110°C.

Il est également proposé un système d'aspiration de poussières comprenant un groupe d'aspiration et au moins un dispositif de guidage tel que décrit ci-dessus.

En particulier, le groupe d'aspiration peut être apte à générer un débit optimum pour aspirer la poussière.

On comprendra qu'un débit d'aspiration trop faible peut entrainer la perte de tout ou partie des poussières et rendre le dispositif de guidage inefficace. A l'inverse, un débit trop important peut entrainer une dépense énergétique inutile.

Avantageusement, il a été déterminé de manière empirique que le flux d'aspiration à l'intérieur du dispositif de guidage pouvait prendre avantageusement des valeurs allant de 10 à 20 m³/h, avec une vitesse de 15 m/s à 40 m/s et de préférence égale à 20 m/s.

On comprendra aisément que le débit d'aspiration généré par le groupe d'aspiration est fonction de divers paramètres dont le nombre de balais, les dimensions du dispositif de guidage, le niveau de propreté souhaité, etc.

Plus particulièrement, le système d'aspiration peut comprendre une nourrice, un groupe d'aspiration et plusieurs dispositifs de guidage tels que décrits précédemment, la nourrice assurant la jonction et la répartition du flux d'air entre le groupe d'aspiration et les dispositifs de guidage. La nourrice permet de diviser le flux d'aspiration généré par le groupe d'aspiration et peut permettre de répartir le flux de façon inégale, notamment en fonction de la longueur et du diamètre des conduits.

L'invention a en outre pour objet un dispositif de guidage d'un système d'aspiration, ce système d'aspiration étant destiné à aspirer de la poussière générée par un balai frottant sur un élément rotatif d'une machine électrique tournante, le dispositif de guidage étant agencé de façon à concentrer un flux d'air, généré par le système d'aspiration, à proximité de l'extrémité du balai en contact avec l'élément rotatif. Le dispositif de guidage définit au moins une chambre d'aspiration conformée de façon à s'ouvrir vers l'élément rotatif, et entourer une partie de balai proche de cette extrémité en contact avec l'élément rotatif. La chambre d'aspiration peut avantageusement être centrée autour du balai.

L'invention est maintenant décrite, en faisant référence aux dessins, non limitatifs, dans lesquels :

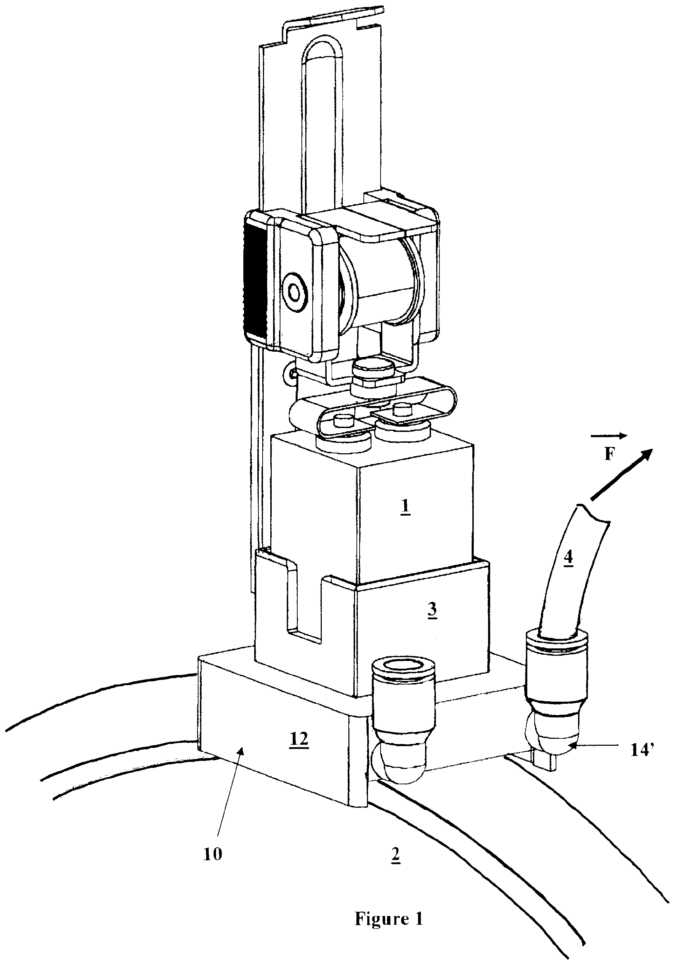

La figure 1 est une vue d'ensemble en perspective d'un dispositif de guidage intégré sur un porte balai d'une machine électrique tournante selon un mode de réalisation de l'invention.

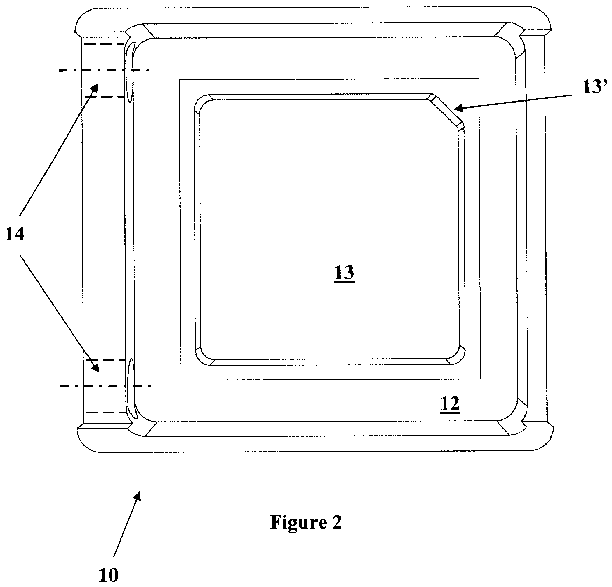

La figure 2 est une vue de dessous en perspective d'un exemple d'un dispositif de guidage selon le mode de réalisation de la figure 1.

Un mode de réalisation particulier de l'invention est représenté sur ces figures. En particulier, le dispositif de guidage selon l'exemple représenté se présente sous la forme d'une semelle 10.

Cette semelle 10 est représentée en vue de dessus sous la forme d'un parallélépipède carré présentant en son centre un orifice 13. Cet orifice 13 est destiné à laisser passer une cage 3 apte à maintenir un balai 1. Selon une variante non représentée, l'orifice 13 peut être directement adapté pour maintenir directement le balai 1.

L'orifice 13 présente notamment un détrompeur 13' permettant d'éviter les erreurs de montage du balai 1 sur le dispositif de guidage 10.

Dans l'exemple représenté, l'orifice 13 est entouré par une chambre d'aspiration 12 ouverte vers l'élément rotatif 2. Cette chambre d'aspiration 12 comprend deux orifices 14 traversant la semelle 10 afin d'assurer le passage du flux d'air F de la chambre 12 vers les conduits 4. La solidarisation des conduits 4 sur la semelle est notamment assurée par un piquage en équerre 14', collé dans chaque orifice 14.

Les piquages en équerre 14' sont des dispositifs traditionnels bien connu de l'homme du métier. Ils peuvent par exemple être réalisés en métal ou en plastique.

La chambre d'aspiration 12 est délimitée par quatre parois verticales entourant une partie du balai 1, dont deux parois latérales, opposées l'une à l'autre, qui s'étendent vers l'élément rotatif 2 davantage que les deux autres parois verticales, de façon à former une jupe. Il est préférable en effet que ces deux autres parois verticales ne constituent pas un obstacle au passage de l'élément rotatif.

La chambre d'aspiration 12 est centrée autour du balai 1.

Les matériaux utilisés pour la semelle 10, les moyens de raccordement 14' ou le conduit 4 résistent à une température allant de 60°C à 200°C et avantageusement à au moins 80°C.

Les matériaux utilisés sont également antistatiques ou traités de telle sorte qu'ils ne retiennent pas les poussières afin de limiter les amas de poussières au niveau des différents éléments et donc les problèmes de fonctionnement mécanique.

Selon un mode de réalisation particulier, la semelle 10 est en polyacétal. On pourrait également envisager de la fabriquer en polyphénylène sulfone, polycarbonate ou encore en polyamide, sous réserve de répondre aux spécificités ci-dessous :
- Résistance à la traction allant de 60 MPa à 200 Mpa, avantageusement au moins 70 Mpa ;
- Température d'utilisation en continu allant de 60°C à 300°C, avantageusement au moins supérieure à 110°C ;
- Résistance électrique allant de 1.10¹⁰ Ohm/cm à 1.10²⁰ Ohm/cm, avantageusement à 1.10¹⁵ Ohm/cm.

La semelle 10 présente également des caractéristiques isolantes, permettant de s'approcher au plus près de l'élément tournant 2, sans générer la formation d'arcs électriques, entre l'élément tournant 2 et la semelle 10, qui pourraient endommager la semelle 10 ou l'élément tournant 2 et donc générer des perturbations de fonctionnement de la machine. Dans l'exemple, la semelle 10 est réalisée en résine acétal par surmoulage ou collage autour de la cage 3.

Le dispositif de guidage est adapté pour s'intégrer dans un système d'aspiration comprenant notamment un groupe d'aspiration, étant entendu que ce groupe d'apiration génére un flux suffisant pour aspirer en continu la plus grande partie des poussières engendrées par le frottement entre le balai et l'élément tournant, de préférence au moins 80%.

Dans l'exemple représenté, la semelle 10 présente les dimensions extérieures suivantes 50mm x 50mm, pour une hauteur allant de 10 à 20 mm. Cette semelle est destinée à entourer un balai traditionnel présentant les dimensions suivantes : 32mm x 32mm x Y mm, la hauteur Y étant un élément variable en fonction de l'usure du balai 1. Pour les dimensions citées, un flux d'apiration F à l'intérieur de la semelle 10 de 15m/s permet d'aspirer environ 80% de la poussière générée.

Le système d'aspiration peut par exemple être adapté à une génératrice comprenant douze balais et porte-balais correspondants, chacun comprenant une semelle telle que décrite précédemment. Afin d'assurer une répartition identique du flux d'aspiration entre chaque semelle, on insère entre le groupe d'aspiration et chaque semelle une nourrice apte à répartir le flux. Pour illuster l'exemple ci-dessus, on pourrait détailler le système d'apiration de la manière suivante :
- Un groupe d'apiration apte à générer un flux primaire d'au moins 120 m³/s,
- Une nourrice apte à diviser le flux primaire en au moins autant de flux secondaire que de conduits pour relier les semelles, c'est-à-dire dans notre exemple au moins douze sorties ;
- Une semelle par porte-balai ;
- Des conduits, adaptés pour véhiculer la poussière sans perte de flux, assurant la liaison entre le groupe d'apiration, la nourrice et les semelles.

Afin d'obtenir une meilleure répartion du flux F à l'intérieur de la semelle il peut être envisagé de relier chaque chambre à deux conduits. La nourrice comprend alors deux fois plus de sorties que de semelles.

## Revendications

1. Ensemble comprenant un dispositif de guidage (10) d'un système d'aspiration, ledit système d'aspiration étant destiné à aspirer de la poussière générée par un balai (1) s'étendant suivant une direction longitudinale, dite hauteur, et frottant sur un élément rotatif (2) d'une machine électrique tournante, et une cage (3) pour maintenir le balai,
dans lequel
le dispositif de guidage (10) est agencé de façon à concentrer un flux d'air (F), généré par le système d'aspiration, à proximité de l'extrémité du balai (1) en contact avec l'élément rotatif (2),
le dispositif de guidage (10) comprend au moins une chambre d'aspiration (12) solidarisée à la cage (3), conformée de façon à s'ouvrir vers l'élément rotatif (2) lorsque le balai (1) frottant contre l'élément rotatif (2) est reçu dans la cage (3), et est traversé par un orifice (14) afin d'assurer le passage du flux d'air de la chambre d'aspiration vers un conduit (4) de raccordement à un groupe d'aspiration,
**caractérisé en ce que**
ladite au moins une chambre d'aspiration (12) comporte un ensemble d'au moins une paroi, ledit ensemble d'au moins une paroi étant conformé de façon à, lorsque le balai (1) est reçu dans la cage (3), entourer une partie du balai proche de ladite extrémité en contact avec l'élément rotatif (2), et l'ensemble s'étendant le long du balai, suivant la hauteur du balai, lorsque le balai est reçu dans la cage.

2. Ensemble selon la revendication 1, **caractérisé en ce que** la chambre d'aspiration est réalisée en une seule pièce avec la cage (3).

3. Ensemble selon l'une quelconque des revendications 1 à 2, **caractérisé en ce qu'**il comprend au moins un conduit (4) pour le raccordement à un groupe d'aspiration.

4. Ensemble selon l'une quelconque des revendications 1 à 3, **caractérisé en ce que** la chambre d'aspiration (12), le moyen de raccordement (14) et/ou le conduit (4) sont réalisés en un matériau antistatique ou recouverts d'un revêtement antistatique.

5. Ensemble selon l'une quelconque des revendications 1 à 4, **caractérisé en ce que** le dispositif de guidage (10) est réalisé en un matériau électriquement isolant et résistant à la chaleur générée par le fonctionnement de la machine.

6. Ensemble selon l'une des revendications 1 à 5, **caractérisé en ce que** le dispositif de guidage définit une pluralité de chambres d'aspiration.

7. Ensemble selon l'une des revendications 1 à 6, **caractérisé en ce que** parmi les parois de la chambre d'aspiration (12), au moins une paroi s'étend davantage du coté de l'ouverture vers l'élément rotatif qu'au moins un autre desdites parois, de sorte que lorsque ledit dispositif de guidage est installé autour de la partie du balai (1) en contact avec l'élément rotatif (2), l'une desdits parois reste au-dessus de l'extrémité du balai en contact avec l'élément rotatif de façon à laisser passer ledit élément rotatif, et l'autre desdites parois s'étend au-dessous de l'extrémité du balai en contact avec l'élément rotatif.

8. Ensemble selon l'une des revendications 1 à 7, dans lequel l'ensemble de parois comporte quatre parois planes solidarisées les unes aux autres, chacune desdites parois étant perpendiculaire aux parois adjacentes.

9. Système d'aspiration de poussières comprenant un groupe d'aspiration et au moins un ensemble selon l'une quelconque des revendications 1 à 8.

10. Système d'aspiration selon la revendication 9, **caractérisé en ce qu'**il comprend une nourrice, un groupe d'aspiration et plusieurs dispositifs de guidage (10), la nourrice assurant la jonction et la répartition du flux d'air (F) entre le groupe d'aspiration et les dispositifs de guidage (10).

## Patentansprüche

1. Anordnung, umfassend eine Führungsvorrichtung (10) eines Saugsystems, wobei das Saugsystem dazu bestimmt ist, den Staub anzusaugen, der von einer Bürste (1) erzeugt wird, die sich entlang einer Längsrichtung, Höhe genannt, erstreckt und an einem drehenden Element (2) einer drehenden elektrischen Maschine reibt, und einem Käfig (3) zum Halten der Bürste,
wobei
die Führungsvorrichtung (10) so angeordnet ist, dass ein Luftstrom (F), der vom Saugsystem erzeugt wird, in der Nähe des Endes der Bürste (1), das in Kontakt mit dem drehenden Element (2) ist, konzentriert wird,
die Führungsvorrichtung (10) mindestens eine fest mit dem Käfig (3) verbundene Saugkammer (12) umfasst, die so ausgebildet ist, dass sie sich zum drehenden Element (2) hin öffnet, wenn die gegen das drehende Element (2) reibende Bürste (1) in dem Käfig (3) aufgenommen ist, und von einer Bohrung (14) durchquert wird, um den Durchgang des Luftstroms aus der Saugkammer zu einer Anschlussleitung (4) an ein Saugaggregat zu gewährleisten,
**dadurch gekennzeichnet, dass**
die mindestens eine Saugkammer (12) eine Anordnung aus mindestens einer Wand umfasst, wobei die Anordnung aus mindestens einer Wand so ausgebildet ist, dass sie, wenn die Bürste (1) in dem Käfig (3) aufgenommen ist, einen Teil der Bürste nahe dem Ende, das in Kontakt mit dem drehenden Element (2) ist, umgibt, und sich die Anordnung entlang der Bürste gemäß der Höhe der Bürste erstreckt, wenn die Bürste in dem Käfig aufgenommen ist.

2. Anordnung nach Anspruch 1, **dadurch gekennzeichnet, dass** die Saugkammer einteilig mit dem Käfig (3) ausgeführt ist.

3. Anordnung nach einem der Ansprüche 1 bis 2, **dadurch gekennzeichnet, dass** sie mindestens eine Leitung (4) zum Anschließen an ein Saugaggregat umfasst.

4. Anordnung nach einem der Ansprüche 1 bis 3, **dadurch gekennzeichnet, dass** die Saugkammer (12), das Anschlussmittel (14) und/oder die Leitung (4) aus einem antistatischen Material ausgeführt sind oder mit einer antistatischen Beschichtung überzogen sind.

5. Anordnung nach einem der Ansprüche 1 bis 4, **dadurch gekennzeichnet, dass** die Führungsvorrichtung (10) aus einem elektrisch isolierenden und gegen die durch den Betrieb der Maschine erzeugte Wärme beständigen Material ausgeführt ist.

6. Anordnung nach einem der Ansprüche 1 bis 5, **dadurch gekennzeichnet, dass** die Führungsvorrichtung eine Vielzahl von Saugkammern definiert.

7. Anordnung nach einem der Ansprüche 1 bis 6, **dadurch gekennzeichnet, dass** sich unter den Wänden der Saugkammer (12) mindestens eine Wand weiter von der Seite der Öffnung zum drehenden Element hin erstreckt als mindestens eine andere der Wände, so dass die Führungsvorrichtung um den Teil der Bürste (1) angeordnet ist, der in Kontakt mit dem drehenden Element (2) ist, eine der Wände über dem Ende der Bürste bleibt, das in Kontakt mit dem drehenden Element ist, so dass das drehende Element durchgelassen wird, und sich die andere der Wände unter dem Ende der Bürste erstreckt, das in Kontakt mit dem drehenden Element ist.

8. Anordnung nach einem der Ansprüche 1 bis 7, wobei die Anordnung aus Wänden vier ebene Wände umfasst, die fest miteinander verbunden sind, wobei jede der Wände senkrecht zu den benachbarten Wänden ist.

9. Staubsaugsystem, umfassend ein Saugaggregat und mindestens eine Anordnung nach einem der Ansprüche 1 bis 8.

10. Saugsystem nach Anspruch 9, **dadurch gekennzeichnet, dass** es einen Verteiler, ein Saugaggregat und mehrere Führungsvorrichtungen (10) umfasst, wobei der Verteiler die Verbindung und die Verteilung des Luftstroms (F) zwischen dem Saugaggregat und den Führungsvorrichtungen (10) gewährleistet.

## Claims

1. Assembly comprising a guidance device (10) for a suction system, said suction system being intended to suck up dust generated by a brush (1) extending in a longitudinal direction, known as the height, and rubbing against a rotating element (2) in a rotary electrical machine, and a cage (3) for holding the brush,
wherein
the guidance device (10) is arranged in such a way as to concentrate a stream of air, (F) generated by the suction system, near the end of the brush (1) that is in contact with the rotating element (2),
the guidance device (10) comprises at least one suction chamber (12) fixedly joined to the cage (3) and configured so that it opens towards the rotating element (2) when the brush (1) rubbing against the rotating element (2) is received in the cage (3), and said guidance device has an orifice (14) passing through it in order to assure the passage of the stream of air from the suction chamber to a pipe (4) for connection to a suction unit,
**characterized in that**
said at least one suction chamber (12) has an assembly of at least one wall, said assembly of at least one wall being configured so as, when the brush (1) is received in the cage (3), to surround part of the brush near said end that is in contact with the rotating element (2), and the assembly extending along the brush, along the height of the brush, when the brush is received in the cage.

2. Assembly according to Claim 1, **characterized in that** the suction chamber is realized in one piece with the cage (3).

3. Assembly according to either of Claims 1 and 2, **characterized in that** it comprises at least one pipe (4) for its connection to a suction unit.

4. Assembly according to any of Claims 1 to 3, **characterized in that** the suction chamber (12), the means of connection (14) and/or the pipe (4) are made from an antistatic material or are covered with an antistatic surface.

5. Assembly according to any of Claims 1 to 4, **characterized in that** the guidance device (10) is made from a material that is electrically insulating and resistant to the heat generated by the operation of the machine.

6. Assembly according to one of Claims 1 to 5, **characterized in that** the guidance device defines a plurality of suction chambers.

7. Assembly according to one of Claims 1 to 6, **characterized in that**, among the walls of the suction chamber (12), at least one wall extends further from the side of the opening towards the rotating element than at least one other of said walls, such that, when said guidance device is installed around the part of the brush (1) that is in contact with the rotating element (2), one of said walls remains above the end of the brush that is in contact with the rotating element in such a way as to permit the passage of said rotating element, and the other of said walls extends below the end of the brush that is in contact with the rotating element.

8. Assembly according to one of Claims 1 to 7, in which the wall assembly comprises four flat walls fixedly joined one to the other, each of said walls being perpendicular to the adjacent walls.

9. Dust suction system comprising a suction unit and at least one assembly according to any of Claims 1 to 8.

10. Dust suction system according to Claim 9, **characterized in that** it comprises a flow diverter, a suction unit and a plurality of guidance devices (10), the flow diverter assuring the connection and the distribution of the stream of air (F) between the suction unit and the guidance devices (10).
